# DEMANDE DE BREVET EUROPEEN

(11) **EP 3 693 597 A1**
(43) Date de publication de la demande: **12.08.2020**
(21) Numéro de dépôt: 19212790.0
(22) Date de dépôt: 02.12.2019
(51) Int. Cl.: F02M 35/12, F01N 1/02

(54) **RESONATEUR ACOUSTIQUE**

(30) Priorité: 05.02.2019 FR 1901098
(71) Demandeur: AKWEL, 01410 Champfromier (FR)
(72) Inventeur: GUERRY, Pascal, 68581 SEPPOIS LE HAUT (FR); EUSTACHE, Adrien, 01460 PORT (FR); ROBINAULT, Michel, 56860 SENE (FR)

(57) **Abrégé**

Le résonateur (10) est configuré pour atténuer le bruit dans une conduite (100) délimitant un canal intérieur (110) d'écoulement d'un fluide selon un axe de référence (X), du type comprenant un compartiment annulaire (12) configuré pour s'étendre autour du canal (110) et muni d'au moins un orifice (14) formant un col de communication avec le canal d'écoulement (110) de façon à former une chambre de résonance (16). Selon l'invention, le compartiment (12) présente une structure interne (18) avec une géométrie conformée pour produire une dissymétrie annulaire de révolution de la chambre de résonance (16) autour de l'axe de référence (X), propre à générer un déphasage d'une onde de pression acoustique réfléchie à l'intérieur de la chambre (16) par rapport à une onde de pression acoustique incidente de l'écoulement principal.

## Description

### Domaine technique.

La présente invention concerne un résonateur acoustique adapté pour être monté dans une conduite d'écoulement d'un fluide, plus particulièrement d'un fluide gazeux, et plus spécifiquement encore dans une conduite d'écoulement d'un gaz d'admission et/ou d'échappement dans un véhicule à moteur à combustion interne. Elle concerne également une conduite comprenant un tel résonateur acoustique.

L'invention s'applique plus particulièrement mais non exclusivement au domaine technique des moteurs thermiques équipés d'un turbocompresseur pour comprimer l'air d'admission.

De façon connue en soi, de nombreux véhicules automobiles à moteur à essence ou à moteur diesel sont équipés d'un turbocompresseur de suralimentation constitué par une première turbine entraînée par les gaz d'échappement du moteur et qui fait tourner une seconde turbine montée sur un même arbre et comprimant l'air ou le mélange air/essence avant son entrée dans le moteur.

Un tel ensemble présente l'avantage de permettre d'accroître sensiblement la puissance du moteur mais la vitesse de rotation de la turbine du turbocompresseur engendre du bruit sur une plage plus large de fréquences sonores potentiellement nuisibles.

Il est connu d'atténuer les fréquences sonores sur un large spectre grâce à des résonateurs acoustiques appropriés ou des amortisseurs, positionnés généralement entre le turbocompresseur et le moteur à combustion interne dans un conduit d'admission.

Un résonateur acoustique peut fonctionner selon différents principes d'atténuation : atténuation des ondes de pression par interférence, par principe d'Helmholtz, etc.

En particulier, un premier principe est le principe du résonateur de Helmholtz. Un tel résonateur est généralement constitué par une cavité qui communique avec le milieu extérieur, ici le conduit d'admission, généralement par un orifice étroit, désigné couramment par col. L'élasticité du volume de gaz à l'intérieur de la chambre en combinaison avec la masse d'inertie du gaz contenu dans le col reproduit un système mécanique masse-ressort avec une fréquence de résonance particulière, dite fréquence propre. Lorsqu'une pression acoustique agit sur le col, cette pression acoustique tend à faire vibrer la masse d'air contenue dans la chambre à une certaine fréquence qui dépend de son volume, de la hauteur et de la section du col. Grâce à cette résonance naturelle, le bruit peut être efficacement réduit, notamment en adaptant la fréquence propre du résonateur à la fréquence de la source de bruit connue.

En outre, un deuxième principe connu est le principe du résonateur à interférence. Un tel résonateur est configuré pour générer une onde stationnaire dans un volume allongé tel qu'un tube connecté au milieu extérieur, ici le conduit d'admission. Selon ce principe, lorsqu'une onde de pression acoustique entre dans le tube depuis le conduit, l'onde de pression se propage à l'intérieur et le long de ce tube puis retourne dans le conduit d'admission avec un déphasage. Le chemin parcouru par l'onde à l'intérieur du tube va générer un déphasage de l'onde de pression sortant du tube par rapport à l'onde de pression entrant dans le tube qui va produire une réflexion de l'onde de pression incidente. L'onde stationnaire est la superposition de deux ondes progressives de sens de propagation opposées : les fréquences de résonance de ces ondes progressives superposées correspondent aux fréquences les plus atténuées.

Il peut être souhaitable d'associer ces deux principes d'atténuation acoustique de type « interférence » et de type « Helmholtz » avec des fréquences de résonance relativement proches afin d'optimiser la largeur de la plage d'amortissement des fréquences sonores. La difficulté réside en ce que ces deux principes requièrent pour fonctionner de façon optimale des formes différentes et non nécessairement compatibles l'une avec l'autre.

Il est ainsi souhaitable pour optimiser le résonateur de type « Helmholtz », de fournir un volume restreint peu allongé s'étendant à proximité du col pour limiter le déphasage. Il est au contraire préférable de fournir un volume allongé pour un résonateur de type « interférence », afin que l'onde de pression puisse se propager avec un déphasage important.

Or, ces deux exigences antagonistes sont difficiles à mettre en œuvre dans un même résonateur.

### Technique antérieure.

On connaît déjà de l'art antérieur, notamment du document FR 2 489 881, un silencieux d'échappement pour moteur à combustion interne. Afin d'associer plusieurs principes acoustiques d'atténuation : réflexion, interférence, absorption et couvrir ainsi au mieux la plage des fréquences du spectre en fonction de l'importance relative des différentes composantes, le silencieux décrit dans ce document comporte plusieurs étages d'atténuation. Un tel agencement se révèle particulièrement encombrant.

Il existe un besoin de disposer d'un moyen d'atténuation acoustique permettant de réduire le bruit issu du fonctionnement du turbocompresseur avec un encombrement minimal en augmentant la plage d'amortissement.

### Résumé de l'invention

A cet effet, l'invention a pour objet un résonateur pour atténuer le bruit dans une conduite délimitant un canal intérieur d'écoulement d'un fluide selon un axe de référence, du type comprenant un compartiment annulaire configuré pour s'étendre autour du canal qui délimite une cavité de résonance annulaire et au moins un orifice formant un col de communication de la cavité avec le canal d'écoulement, l'orifice s'étendant longitudinalement dans la direction circonférentielle, **caractérisé en ce que** le compartiment présente une structure interne avec une géométrie conformée pour produire une dissymétrie de révolution du volume intérieur du compartiment annulaire autour de l'axe de référence, propre à générer un déphasage d'une onde de pression acoustique se propageant dans la cavité par rapport à une onde de pression acoustique se propageant dans le canal.

Les deux principes de résonateur de type à interférence et de type Helmholtz nécessitent des formes différences difficilement compatibles au sein d'un même résonateur sans augmenter considérablement l'encombrement du résonateur global.

En effet, pour le résonateur de type à interférence, une onde plane doit pouvoir se propager le long d'un tube alors que pour le résonateur de type Helmholtz, le volume servant de ressort (analogie mécanique) ne doit pas être trop éloigné du col pour réagir sans déphasage.

Avec un orifice de communication en forme de fente le long de sa circonférence, le résonateur se comporte comme un résonateur d'Helmholtz car les différents points de volume du compartiment ne présentent pas de déphasage entre eux. Avec l'introduction d'une dissymétrie de révolution du volume annulaire du compartiment autour de l'axe de référence, le résonateur se comporte également comme un résonateur à interférence car la dissymétrie va générer un déphasage le long de cette circonférence.

Grâce à l'invention, le résonateur peut produire à la fois un effet d'Helmholtz et un effet d'interférence et ce, sans nécessiter un encombrement supplémentaire et tout en offrant une plage d'amortissement importante.

Un résonateur selon l'invention peut en outre comprendre l'une ou plusieurs des caractéristiques détaillées ci-après.

Dans un mode de réalisation préféré de l'invention, l'orifice est formé par une fente quasi-circonférentielle ou circonférentielle le long du périmètre du canal d'écoulement du fluide.

Dans un autre mode de réalisation préféré de l'invention, l'orifice présente une épaisseur radiale, désignée par hauteur du col, cette hauteur du col étant variable angulairement.

Dans un autre mode de réalisation préféré de l'invention, le col comprend un pavillon entre une gorge à laquelle se raccorde la chambre et une bouche ouverte sur le canal d'écoulement, la forme du pavillon définit une fonction d'expansion croissante de sa section entre la gorge et la bouche, en particulier une fonction linéaire, exponentielle, conique ou quelconque.

Dans un autre mode de réalisation préféré de l'invention, la structure interne comprend au moins une paroi annulaire en saillie globalement radiale et conformée pour produire la dissymétrie de révolution.

Dans un autre mode de réalisation préféré de l'invention, la paroi annulaire est une nervure annulaire en saillie radiale vers l'intérieur de la cavité délimitant axialement un côté de l'orifice et présentant une inclinaison par rapport à un plan radial orthogonal à l'axe de référence.

Dans un autre mode de réalisation préféré de l'invention, la paroi annulaire est une paroi d'extrémité axiale de la chambre qui s'étend de façon oblique en formant un angle α non nul avec un plan radial orthogonal à l'axe de référence.

Dans un autre mode de réalisation préféré de l'invention, le résonateur comprend un organe-insert globalement tubulaire autour de l'axe de référence destiné à être inséré à l'intérieur de la conduite qui délimite, intérieurement, le canal d'écoulement de fluide et, extérieurement, avec la conduite, un espace comprenant le compartiment annulaire.

Dans un autre mode de réalisation préféré de l'invention, l'organe-insert présente une portion intermédiaire tubulaire et des portions d'extrémités respectivement convergente et divergente vers et à partir de la portion intermédiaire.

Dans un autre mode de réalisation préféré de l'invention, le résonateur comprend deux parois respectivement proximale et distale pour fermer axialement la cavité, les deux parois étant formées par une même paroi hélicoïdale continue.

Dans un autre mode de réalisation préféré de l'invention, la paroi hélicoïdale complète au moins un tour.

Dans un autre mode de réalisation préféré de l'invention, la paroi hélicoïdale délimite un volume en hélice fermé dans un sens d'enroulement de l'hélice par des parois terminales.

Dans un autre mode de réalisation préféré de l'invention le résonateur comprend une pluralité de compartiments annulaires adjacents délimitant une pluralité de chambres de résonateur adjacentes formées dans la direction axiale, chacune étant reliée au canal d'écoulement par au moins orifice de communication.

### Brève description des dessins

D'autres caractéristiques et avantages de l'invention apparaîtront à la lumière de la description qui suit, faite en référence aux dessins annexes dans lesquels :
**Fig.1**

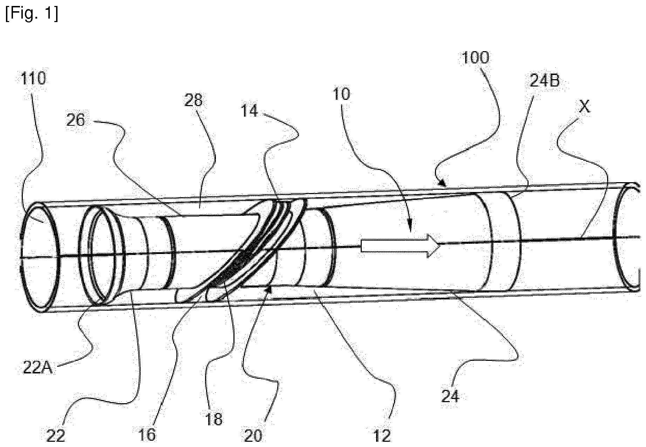

   [fig.1] est une vue en perspective d'un résonateur acoustique monté à l'intérieur d'une conduite selon un premier mode de réalisation de l'invention;
**Fig.2**

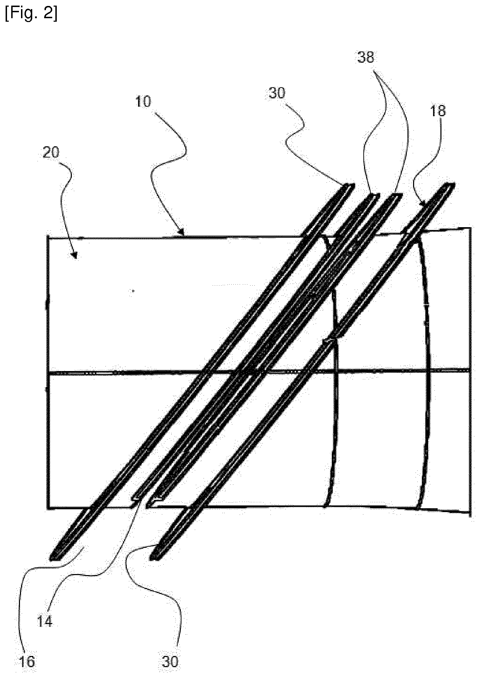

   [fig.2] est une vue détaillée et partielle à échelle agrandie du résonateur acoustique de la figure 1 ;
**Fig.3**

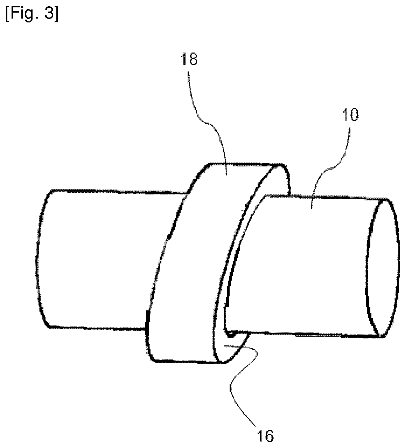

   [fig.3] est une vue schématique du volume d'une chambre de résonance du résonateur des figures 1 et 2 ;
**Fig.4**

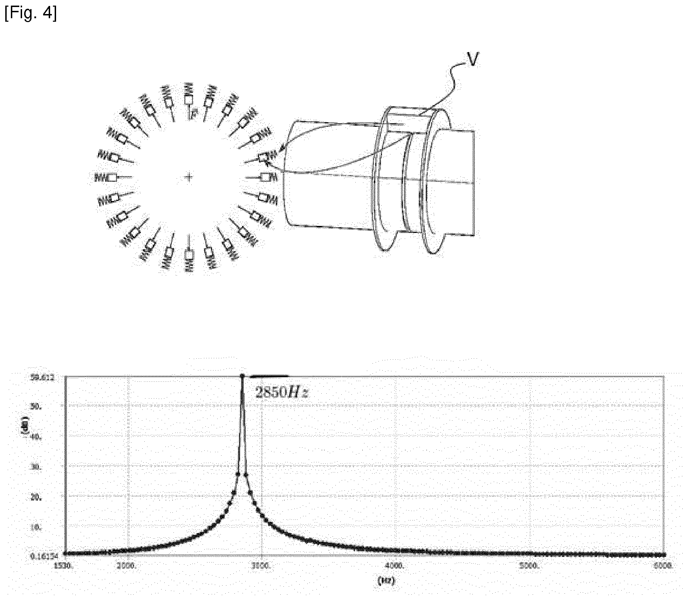

   [fig.4] représente une modélisation d'un principe de fonctionnement par analogie mécanique d'une première configuration de résonateur et représente un graphique représentant l'amortissement en décibel en fonction de la fréquence en Hertz du résonateur modélisé ;
**Fig.5**

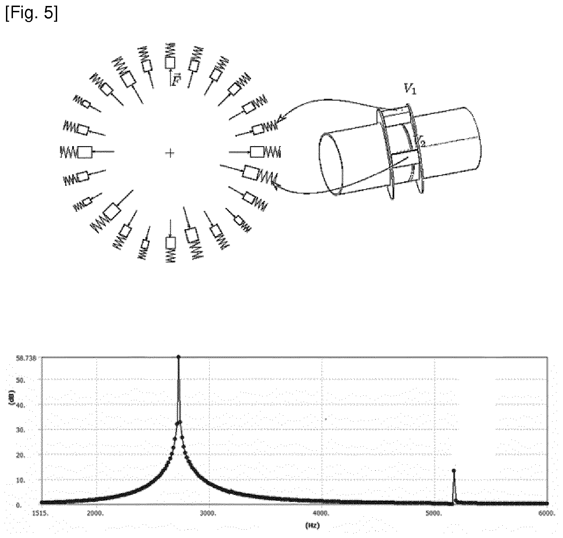

   [fig.5] représente une modélisation conforme à la figure 4 d'une deuxième configuration de résonateur et le graphique correspondant ;
**Fig.6**

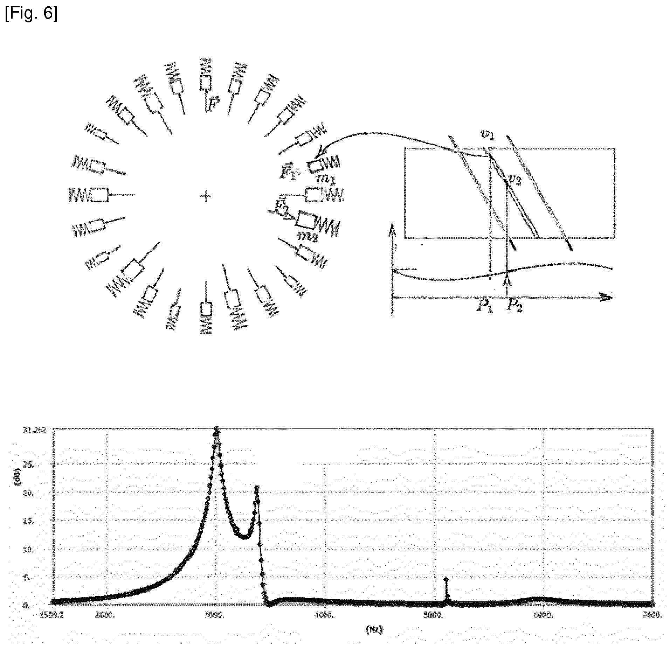

   [fig.6] représente une modélisation conforme à la figure 4 d'une troisième configuration de résonateur et le graphique correspondant ;
**Fig.7**

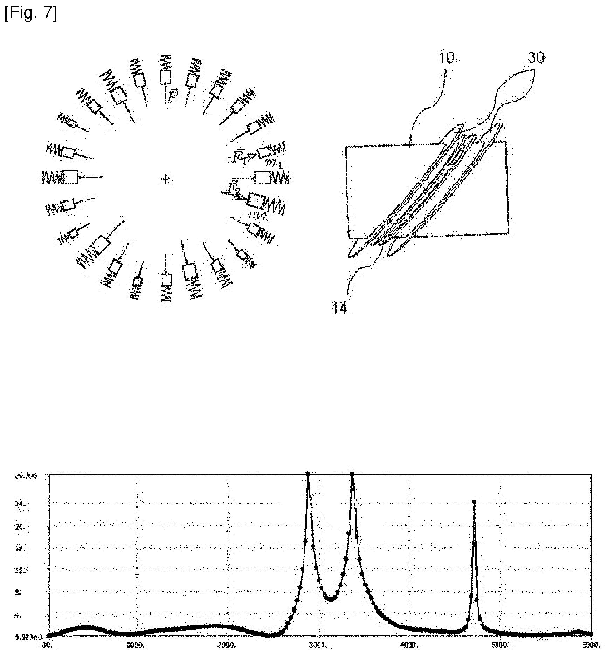

   [fig.7] représente une modélisation conforme à la figure 4 d'une quatrième configuration de résonateur et le graphique correspondant ;
**Fig.8**

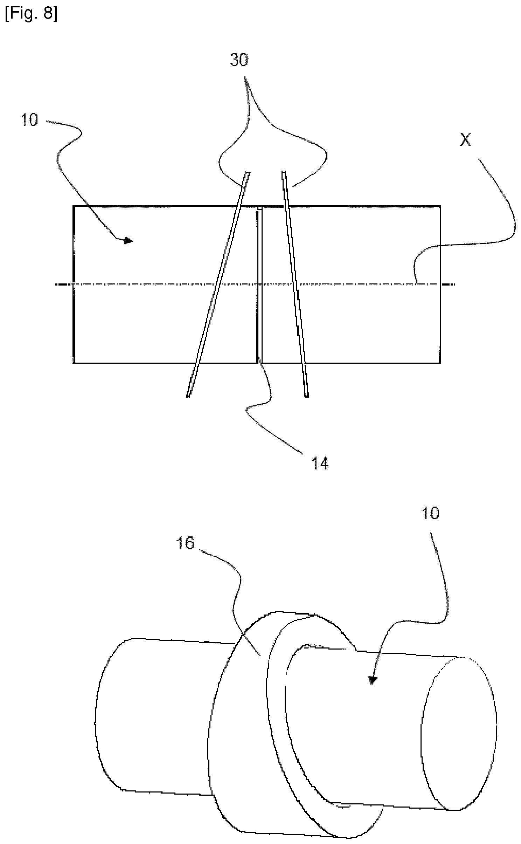

   [fig.8] illustre un résonateur selon un deuxième mode de réalisation de l'invention et une modélisation correspondante du volume de la chambre de résonance du résonateur ;
**Fig.9**

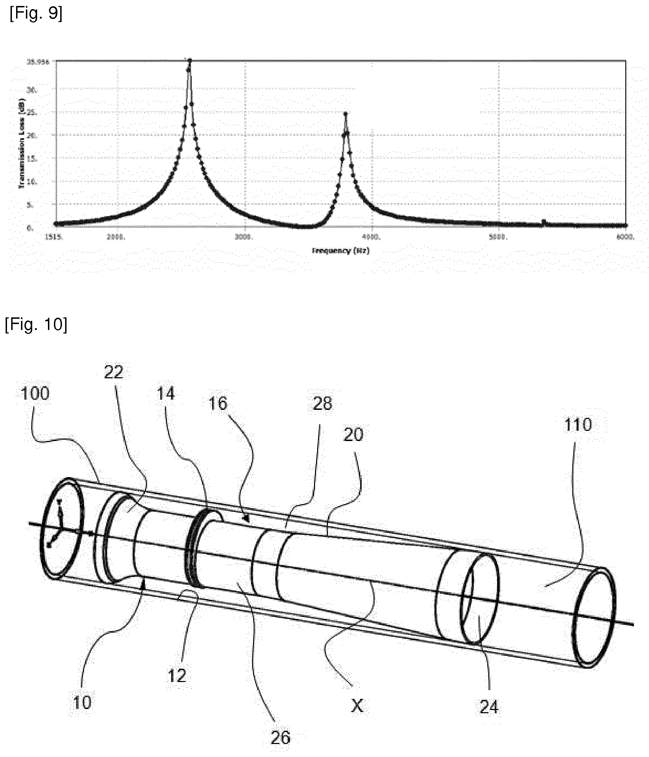

   [fig.9] illustre le graphique d'évolution de l'amortissement en décibel en fonction de la fréquence en Hertz du résonateur de la figure 8 ;
**Fig.10**
   [fig.10] représente un troisième mode de réalisation du résonateur selon l'invention ;
**Fig.11**

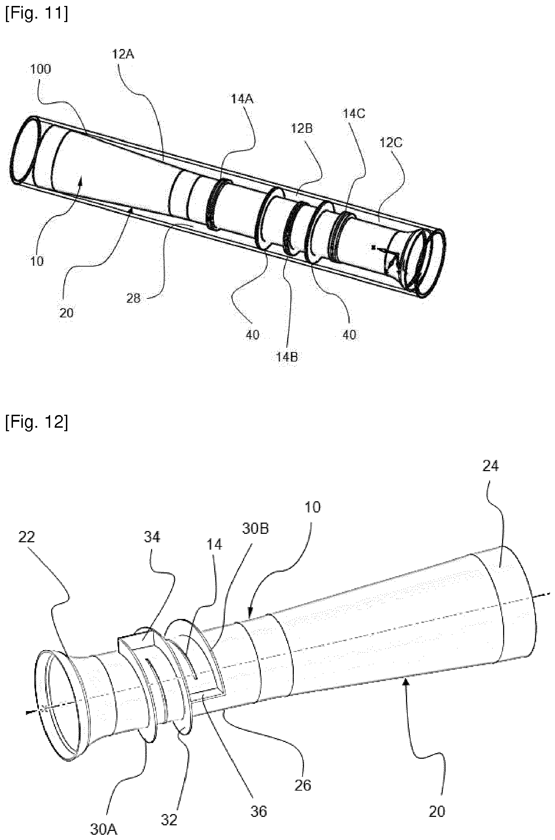

   [fig.11] représente un quatrième mode de réalisation du résonateur selon l'invention ;
**Fig.12**
   [fig.12] représente un cinquième mode de réalisation du résonateur selon l'invention ;
**Fig.13**

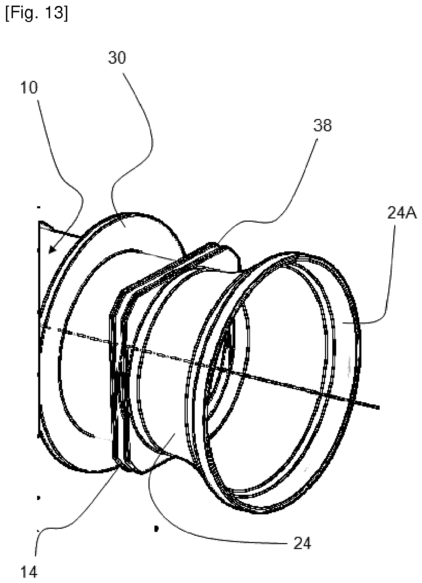

   [fig.13] représente un sixième mode de réalisation du résonateur selon l'invention ;
**Fig.14**

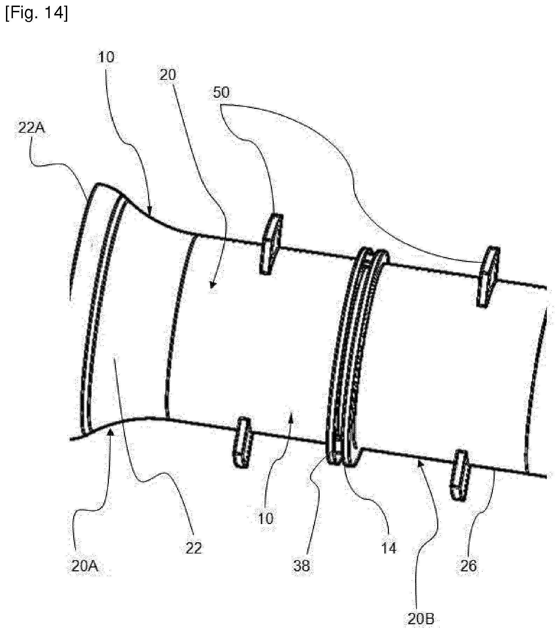

   [fig.14] est une vue partielle en perspective d'un résonateur selon le troisième mode de réalisation comprenant des moyens de fixation à la conduite à l'intérieur dans laquelle il est monté.

### Description des modes de réalisation

On a représenté sur **la** **figure 1** un résonateur acoustique destiné à atténuer le bruit selon un premier mode de réalisation de l'invention. Ce résonateur est désigné par la référence générale 10.

L'invention s'applique plus particulièrement mais non exclusivement à l'atténuation d'une nuisance acoustique à l'intérieur d'une conduite 100 d'écoulement d'un fluide, par exemple d'écoulement d'un gaz d'admission et/ou d'échappement. Cette conduite 100 est préférentiellement sensiblement tubulaire et d'axe de référence X. Bien entendu, en variante, la conduite 100 peut comprendre des formes différentes, telle qu'une forme tubulaire coudée ou en « S », etc.

Par exemple, la conduite 100 est un conduit d'admission d'air d'un système d'admission d'air d'un moteur à combustion interne d'un véhicule automobile. Cette conduite 100 délimite un canal intérieur 110 d'écoulement d'un fluide d'axe de référence X et de forme générale sensiblement tubulaire autour de cet axe X.

Dans le premier mode de réalisation illustré sur **la** **figure 1**, le résonateur 10 est monté à la conduite 100 et comprend un compartiment annulaire 12 configuré pour s'étendre autour du canal d'écoulement 110. Ce compartiment annulaire 12 délimite une cavité de résonance 16 et est pourvu d'au moins un orifice 14 formant col de communication de la cavité 16 avec le canal d'écoulement 110. Ce col 14 génère ainsi un écoulement de fluide du canal 110 vers la cavité 16 à l'origine d'un phénomène de résonance propre à atténuer certaines fréquences sonores comme cela va être décrit ci-après. La cavité 16 et le col 14 forment ainsi un résonateur.

De préférence, le col 14 comprend un pavillon entre une gorge à laquelle se raccorde la cavité 16 et une bouche ouverte sur le canal d'écoulement 110, la forme du pavillon définit une fonction d'expansion croissante de sa section entre la gorge et la bouche, en particulier une fonction linéaire, exponentielle, conique ou quelconque.

Dans le premier mode de réalisation illustré sur **la** **figure 1** ainsi que dans tous les modes de réalisation exposés et illustrés dans la présente description, le compartiment annulaire 12 s'étend à l'intérieur de la conduite 100. En effet, comme cela est illustré sur **la** **figure 1****,** le résonateur acoustique 10 est inséré coaxialement et radialement à l'intérieur de la conduite 100. Le résonateur 10 est ainsi conçu comme un insert 20 qui est fabriqué séparément de la conduite 100 et inséré lors de l'assemblage à l'intérieur de la conduite 100. En variante, bien entendu, le compartiment annulaire 12 du résonateur 10 peut être monté à l'extérieur de la conduite 100 autour de la paroi externe de la conduite comme cela est par exemple décrit dans le document EP 3 042 064.

Dans cet exemple, l'insert 20 a une forme globalement tubulaire présentant des portions d'extrémités 22 et 24 sensiblement évasées qui confère à l'insert 20 une forme générale hyperboloïde. Ainsi, l'insert 20 comprend, dans cet exemple de réalisation, un tronçon amont convergent 22 sensiblement tronconique dont l'extrémité amont 22A de forme circulaire est montée au contact étanche de la paroi interne de la conduite 100. L'insert 20 comprend en outre un tronçon intermédiaire cylindrique 26 agencé de manière coaxiale à la conduite 100 et un tronçon aval 24 sensiblement tronconique qui diverge à partir du tronçon central 26 et qui se termine par une extrémité aval 24B montée également au contact étanche de la paroi interne de la conduite 100. L'insert 20 peut être formé par exemple par deux pièces éventuellement reliées entre elles et maintenues à l'intérieur de la conduite 100 par adhésion à l'endroit des extrémités amont 22A et aval 24B.

Ainsi, comme cela est visible dans l'exemple illustré sur **la** **figure 1****,** le corps du résonateur délimite à l'intérieur localement une portion de section rétrécie d'écoulement du canal 110. On notera également que les tronçons respectivement convergent 22 et divergent 24 (vu dans le sens d'écoulement du fluide) qui sont formés de part et d'autre du tronçon intermédiaire 26 globalement cylindrique du résonateur 10 permettent de réduire les pertes de charges lors de l'écoulement du fluide dans la conduite. L'insert 20 délimite de façon connue en soi dans cet exemple une forme de Venturi, optimisée pour limiter la perte de charge dans le sens du flux (angle de convergence inférieur à 30° et angle de divergence inférieur à 7°).

Par « convergent » et « divergent », on entend respectivement dans la présente description tout rétrécissement et élargissement de section de passage conférant au tronçon considéré une géométrie par exemple tronconique ou évasée (par exemple sensiblement en forme d'hyperboloïde de révolution).

L'insert 20 et la conduite 100 délimite alors un volume annulaire 28 communiquant avec le canal d'écoulement de fluide 110, à l'intérieur duquel s'étend le compartiment annulaire 12. Ce compartiment annulaire 12 comprend un orifice 14 formant un col afin de mettre en communication le canal d'écoulement et la cavité de résonance 16.

De préférence, l'orifice 14 se présente sous forme d'une fente s'étendant longitudinalement globalement dans la direction circonférentielle, c'est-à-dire dans une direction tangente à un cercle centré sur l'axe de référence X. En variante, la fente peut s'étendre de façon légèrement décalée ou oblique par rapport à cette direction circonférentielle.

Lorsque le compartiment annulaire 12 ne comporte qu'un unique orifice 14 sous forme de fente, la fente peut être avantageusement être interrompue localement par un ou des ponts de matière assurant la continuité structurelle (fente quasi-circonférentielle).

La fente peut former un orifice continu dans la direction longitudinale sans interruption ou peut présenter des interruptions. En particulier, de préférence, afin de faciliter la fabrication en une pièce de l'organe insert 20, la fente peut s'étendre sur une partie seulement de la circonférence.

Conformément à l'invention et comme illustré par exemple **en** **figure 3****,** le compartiment 12 présente une structure interne 18 avec une géométrie conformée pour produire une dissymétrie de révolution du volume de la cavité de résonance 16 autour de l'axe de référence X.

Dans le premier mode de réalisation et comme cela est illustré sur **la** **figure 2****,** la structure interne géométrique 18 comprend au moins une paroi annulaire 30 de forme générale annulaire conformée pour produire la dissymétrie de révolution. Cette paroi annulaire 30 s'étend de préférence radialement vers l'extérieur selon une orientation sensiblement oblique par rapport à un plan de référence orthogonal à l'axe de référence X en formant un angle α. Par exemple, l'angle α est compris entre 0° et 80°.

Dans l'exemple illustré **en** **figure 2****,** cette paroi 30 est une paroi d'extrémité axiale de la cavité 16 qui s'étend de façon oblique en formant un angle α non nul avec un plan radial orthogonal à l'axe de référence X. Dans l'exemple illustré sur **les** **figures 1** **et** **2****,** la structure interne 18 comprend deux parois annulaires 30 s'étendant dans une direction oblique et qui ferment axialement la chambre de résonance 16 de part et d'autre dans la direction axiale. Les deux parois annulaires 30 s'étendent dans cet exemple de façon parallèle. Comme cela est illustré sur **la** **figure 3****,** le volume de la chambre 16 ainsi obtenue comprend une géométrie 18 à dissymétrie de révolution annulaire.

Grâce à cette dissymétrie de révolution, en plus d'un phénomène de résonance de type Helmholtz du à la présence du col 14 et de la cavité de résonance 16, la dissymétrie de révolution de volume est propre à introduire un déphasage circonférentiel d'une onde de pression acoustique réfléchie à l'intérieur de la cavité 16 par rapport à une onde de pression acoustique incidente de l'écoulement principal. Ce déphasage introduit permet de créer un phénomène de résonance de type à interférence entre l'onde de pression acoustique se propageant dans l'écoulement principal et l'onde de pression acoustique réfléchie après propagation à l'intérieur de la chambre de résonance 16 de l'invention.

**Les** **figures 4 à 7** illustrent une modélisation simplifiée du principe de fonctionnement du résonateur 10 de ce premier mode de réalisation. Cette modélisation repose sur une analogie avec un système mécanique de type masse-ressort.

L'effet de résonateur de Helmholtz peut être comparé à un système masse-ressort, dans lequel la masse est l'air entraîné dans le col 14 et le ressort est l'air dans le volume beaucoup plus grand de la cavité 16. Comme avec tout résonateur de Helmholtz, ce résonateur acoustique a une fréquence propre, pour laquelle l'absorption de l'énergie acoustique est maximale.

Afin de modéliser le principe de fonctionnement de ce résonateur 10, le volume de la chambre de résonance 16 est découpé par discrétisation volumique. Le col en fente circonférentielle 14 est représenté par une succession continue de volumes élémentaires d'air formant les masses m et la cavité 16 est représentée par une succession de volumes élémentaires formant les ressorts de raideur k. La modélisation du résonateur 10 comprend donc une pluralité de systèmes masse-ressort élémentaires répartis régulièrement de façon circonférentielle.

Pour la première modélisation de **la** **figure 4**, le résonateur 10 comprend un compartiment 12 avec un volume symétrique de révolution autour de l'axe X, les forces exercées sur les masses m sont identiques et les raideurs k des ressorts sont également identiques car les volumes élémentaires V sont identiques sur toute la périphérie. Dans ce cas, les masses oscillent en même temps et il en résulte un phénomène de résonance principal de type Helmholtz comme cela est visible sur le graphique de cette même figure. Le phénomène de résonance se traduit dans ce cas par un pic principal à 2850 Hz.

Pour la deuxième modélisation illustrée par **la** **figure 5**, le résonateur 10 présente une dissymétrie de volume autour de l'axe de référence X, en particulier parce que les parois 30 du compartiment 12 sont inclinées. Dans cette modélisation, la fente 14 est circonférentielle non inclinée. Le volume de la chambre de résonance 16 présente une dissymétrie de révolution comme illustré notamment **en** **figure 3****.** En particulier, les volumes élémentaires de cavité V1 et V2 n'ont pas la même forme le long de la circonférence. La raideur k des ressorts des volumes élémentaires n'étant pas la même du fait que les volumes élémentaires n'ont pas les mêmes formes, les masses m ne vont pas osciller de la même manière sous l'effet de la même force. Ces différences de raideurs k vont provoquer l'apparition d'une onde se propageant le long de la chambre 16 annulaire avec un déphasage par rapport à l'onde incidente se propageant dans le canal 110. Ceci va se traduire par un phénomène d'interférence visible sur le graphique associé à **la** **figure 5** montrant, en plus d'un pic principal lié à l'effet Helmholtz, un amortissement de treize décibels à la fréquence 5175 Hz.

Pour la troisième modélisation illustrée par **la** **figure 6**, la fente 14 est en outre inclinée par rapport à un plan orthogonal à l'axe de référence X. L'inclinaison de la fente 14 fait apparaître deux effets supplémentaires par rapport à la deuxième modélisation. D'une part, la forme des petits volumes de découpage du col 14 varie circonférentiellement, donc les masses correspondantes varient également. D'autre part, l'inclinaison de la fente a pour conséquence que chaque petit volume v1, v2 ne voient pas la même pression d'excitation par l'onde de pression acoustique incidente. Les masses ne voient donc pas les mêmes forces de pression. Les petits volumes v1, v2 subissent des pressions P1 et P2 ce qui fait changer les forces F1 et F2 sur les masses m1 et m2. Le graphique de la **figure 6** illustre une courbe comprenant un pic principal de largeur plus grande que la largeur du pic de **la** **figure 5** présentant un double pic, le premier pic correspondant à l'effet d'Helmholtz et le deuxième pic correspondant à l'effet d'interférence ainsi qu'un troisième pic correspondant à une harmonique liée à la fréquence fondamentale de l'effet d'interférence du deuxième pic.

Pour la quatrième modélisation de **la** **figure 7** qui correspond au premier mode de réalisation, la fente 14 présente en plus un col de hauteur variable selon la direction circonférentielle. Ainsi, comme cela est visible sur **les** **figures 1 à 3**, dans le premier mode de réalisation, la fente circonférentielle 14 est délimitée par des rebords saillants formés pas des nervures annulaires 38 s'étendant radialement vers l'extérieur à partir d'une paroi externe périphérique de l'insert 20. La variation de la hauteur du col 14 ajoute un effet supplémentaire qui est la variation des petits volumes élémentaires v représentant la masse m du fait de la variation circonférentielle de la hauteur du col 14. Cet effet produit un pic supplémentaire lié à un effet d'interférence du fait de la variation de la hauteur du col 14. Le graphique de **la** **figure 7** illustre une courbe comprenant deux pics principaux à des fréquences relativement proches, une fréquence liée à l'effet Helmholtz et une fréquence liée à l'effet d'interférence et un pic secondaire correspondant à une harmonique liée à la fréquence fondamentale de l'effet d'interférence.

On a représenté sur **la** **figure 8**, un deuxième mode de réalisation de l'invention. Dans ce deuxième mode de réalisation, les parois annulaires 30 sont inclinées de façon non parallèle. Dans ce cas, le volume de la chambre de résonance 16 a également une forme générale dissymétrique de révolution représentée sur **la** **figure 8****.** Le graphique obtenu représenté en **figure 9** présente un pic d'effet Helmholtz à 2500 Hz et un pic d'effet interférence à 3795 Hz avec une valeur d'amortissement à 25 décibels.

On a représenté sur **la** **figure 10** un troisième mode de réalisation de l'invention. Dans ce troisième mode de réalisation, le compartiment annulaire 12 est dépourvu de parois axiales de cloisonnement et est formé par l'espace annulaire 28 délimité par d'une part la surface extérieure de l'organe-insert 20 et d'autre part la surface interne du conduit 100. La dissymétrie de révolution du compartiment annulaire 12 est générée, dans ce troisième mode de révolution, par la dissymétrie de révolution du col de communication 14. Le col 14 présente une hauteur variant circonférentiellement comme dans la quatrième modélisation.

On a représenté sur **la** **figure 11** un quatrième mode de réalisation. Afin de permettre une atténuation des fréquences sonores dans différentes gammes de fréquences, le résonateur 10 délimite, dans l'espace annulaire 28, une pluralité de compartiments annulaires 12A, 12B, 12C, délimitant chacun des chambres de résonance avec des fréquences propres différentes. Les compartiments annulaires 12A à 12C sont délimités par des parois annulaires de cloisonnement axial 40, chaque compartiment 12A à 12C comprenant respectivement un orifice de communication 14A à 14C avec le canal d'écoulement 110. Dans l'exemple illustré, le résonateur 10 comprend un organe-insert 20 pourvu de parois annulaires 40 en saillie radiale vers l'extérieur. Bien entendu, conformément à l'invention, au moins une des parois annulaires axiales de cloisonnement 40 ou une des nervures annulaires 38 du col 14 présentent une dissymétrie annulaire de révolution.

**La** **figure 12** illustre un cinquième mode de réalisation de l'invention. Dans ce cinquième mode de réalisation, le résonateur 10 comprend deux parois respectivement amont 30A et aval 30B (dans le sens d'écoulement du fluide indiqué par la flèche) pour fermer la chambre de résonance 16 axialement et les deux parois 30A, 30B sont formées par une même paroi hélicoïdale continue 32. De préférence, la paroi hélicoïdale 32 complète au moins un tour, dans cet exemple sur la surface extérieure de l'insert 20. Dans cet exemple, la paroi hélicoïdale 32 délimite un volume en hélice fermé dans un sens d'enroulement de l'hélice par des parois terminales 34 et 36. Par ailleurs, dans une variante non illustrée, de préférence, le pas de l'hélice est variable.

**La** **figure 13** illustre un sixième mode de réalisation de l'invention. Dans ce sixième mode de réalisation, la fente 14 présente un col à hauteur variable circonférentiellement délimité par deux nervures annulaires 38 en saillie radiale de section transversale carrée. Cette conformation permet d'augmenter le nombre d'harmoniques de la fréquence fondamentale du résonateur 10 de l'effet d'interférence.

**La** **figure 14** illustre un septième mode de réalisation de l'invention. Dans ce septième mode de réalisation, le corps périphérique du résonateur 10 comprend des organes 50 de positionnement de l'organe insert 20 à l'intérieur de la conduite 100. Ces organes de positionnement 50 comprennent des nervures d'appui en saillie radiale disposées sur le pourtour de l'organe insert 20. En outre, de préférence, l'organe insert 20 est réalisé sous forme de deux pièces distinctes identifiées sur **la** **figure 14** par les références 20A et 20B et reliées entre elles au niveau de l'orifice de communication 14 en forme de fente par des languettes 52.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Résonateur (10) pour atténuer le bruit dans une conduite (100) délimitant un canal intérieur (110) d'écoulement d'un fluide selon un axe de référence (X), du type comprenant un compartiment annulaire (12) configuré pour s'étendre autour du canal (110) qui délimite une cavité de résonance (16) annulaire et au moins un orifice (14) formant un col de communication de la cavité (16) avec le canal d'écoulement (110), l'orifice (14) s'étendant longitudinalement dans la direction circonférentielle, **caractérisé en ce que** le compartiment (12) présente une structure interne (18) avec une géométrie conformée pour produire une dissymétrie de révolution du volume intérieur du compartiment annulaire (12) autour de l'axe de référence (X), propre à générer un déphasage d'une onde de pression acoustique se propageant dans la cavité (16) par rapport à une onde de pression acoustique se propageant dans le canal (110).

2. Résonateur (10) selon la revendication précédente, dans lequel l'orifice (14) est formé par une fente quasi-circonférentielle ou circonférentielle le long du périmètre du canal d'écoulement (110) du fluide.

3. Résonateur (10) selon l'une quelconque des revendications précédentes, dans lequel l'orifice (14) présente une épaisseur radiale, désignée par hauteur du col, cette hauteur du col étant variable circonférentiellement.

4. Résonateur (10) selon l'une quelconque des revendications précédentes, dans lequel le col (14) comprend un pavillon entre une gorge à laquelle se raccorde la chambre (16) et une bouche ouverte sur le canal d'écoulement (110), la forme du pavillon définit une fonction d'expansion croissante de sa section entre la gorge et la bouche, en particulier une fonction linéaire, exponentielle, conique ou quelconque.

5. Résonateur (10) selon l'une quelconque des revendications précédentes, dans lequel la structure interne (18) comprend au moins une paroi annulaire en saillie globalement radiale (30) et conformée pour produire la dissymétrie de révolution.

6. Résonateur (10) selon la revendication précédente, dans lequel la paroi annulaire est une nervure annulaire (38) en saillie radiale vers l'intérieur de la cavité (16) délimitant axialement un côté de l'orifice (14) et présentant une inclinaison par rapport à un plan radial orthogonal à l'axe de référence (X).

7. Résonateur (10) selon la revendication 5 ou 6, dans lequel la paroi annulaire est une paroi d'extrémité axiale (30) de la chambre (16) qui s'étend de façon oblique en formant un angle α non nul avec un plan radial orthogonal à l'axe de référence (X).

8. Résonateur (10) selon l'une quelconque des revendications précédentes, comprenant un organe-insert (20) globalement tubulaire autour de l'axe de référence (X) destiné à être inséré à l'intérieur de la conduite (100) qui délimite, intérieurement, le canal d'écoulement de fluide (110) et, extérieurement, avec la conduite (100), un espace (28) comprenant le compartiment annulaire (12).

9. Résonateur (10) selon la revendication précédente, dans lequel l'organe-insert (20) présente une portion intermédiaire tubulaire (26) et des portions d'extrémités respectivement convergente (22) et divergente (24) vers et à partir de la portion intermédiaire (26).

10. Résonateur (10) selon l'une quelconque des revendications précédentes, comprenant deux parois respectivement proximale (30A) et distale (30B) pour fermer axialement la cavité (16), les deux parois (30A, 30B) étant formées par une même paroi hélicoïdale continue (32).

11. Résonateur (10) selon la revendication précédente, dans lequel la paroi hélicoïdale (32) complète au moins un tour.

12. Résonateur (10) selon la revendication 10 ou 11, dans lequel la paroi hélicoïdale (32) délimite un volume en hélice fermé dans un sens d'enroulement de l'hélice par des parois terminales (34, 36).

13. Résonateur (10) selon l'une quelconque des revendications précédentes, comprenant une pluralité de compartiments annulaires adjacents (12A, 12B, 12C) délimitant une pluralité de chambres de résonateur adjacentes (16A, 16B, 16C) formées dans la direction axiale, chacune étant reliée au canal d'écoulement (110) par au moins orifice de communication (14A, 14B, 14C).
